# EUROPEAN PATENT APPLICATION

(11) **EP 4 686 651 A1**
(43) Date of publication of application: **04.02.2026**
(21) Application number: 25189427.5
(22) Date of filing: 14.07.2025
(51) Int. Cl.: B64C 3/56, F16C 11/04

(54) **BUSH**

(30) Priority: 31.07.2024 GB 202411253
(71) Applicant: Airbus Operations Limited, Bristol BS34 7PA (GB)
(72) Inventor: JAMES-RUSSELL, Cameron, Bristol, BS34 7PA (GB); MORRELL, Paul, Bristol, BS34 7PA (GB)
(74) Representative: Abel & Imray LLP

(57) **Abstract**

A bush (100, 200, 300) is provided comprising a sleeve (102, 214) for receiving a pin; a shoulder (104, 216) extending from the sleeve, the shoulder for delimiting insertion of the sleeve into an aperture; and a sensor mount (108) for mounting a sensor such that the sensor may detect the presence of a pin within the sleeve. Installing such a bush within an aperture of a component may negate the requirement for lugs and/or brackets on the component. This may enable reduction of the weight, size and/or complexity of the component.

## Description

### BACKGROUND OF THE INVENTION

The present disclosure relates to a bush.

The present disclosure also concerns a latch line, also known as a latch assembly, for an aircraft wing, an aircraft wing, and a method of mounting a sensor to a component.

In civil aviation, it is known to mount equipment to aircraft structures and components via lugs. A lug may be described as a protrusion integrated with and extending from a structure or component, providing a designated point for attachment of the equipment. Lugs can increase the mass of the structure or component in question, due to the additional material required to manufacture the lug itself, which may not otherwise contribute to the mechanical performance of the structure or component. Further, lugs and associated brackets may be bulky, making them an undesirable solution for mounting equipment in locations with tight space requirements. The geometry of a bracket attached to a lug may not be optimal for some use cases, for example where equipment is to be mounted adjacent to an aperture in a component.

Known mechanical bushes, or bushings, are bearing or sleeving devices configured to be placed within an aperture. Such bushes have a relatively simple construction, and are primarily designed to enhance movement and limit friction and axial slide between components.

The present invention seeks to mitigate one or more of the above-mentioned problems. Alternatively or additionally, the present invention seeks to provide an improved bush.

### SUMMARY OF THE INVENTION

The present invention provides, according to a first aspect, a bush. The bush may comprise a sleeve for receiving a pin. The bush may further comprise a shoulder extending from the sleeve, the shoulder for delimiting insertion of the sleeve into an aperture. The bush may further comprise a sensor mount for mounting a sensor such that the sensor may detect the presence of a pin within the sleeve.

In this way, the bush may be installed within an aperture in a component, and equipment such as a sensor may be mounted on the bush. Thus, the bush may negate the requirement for lugs and/or brackets on the component. This may enable reduction of the weight, size and/or complexity of the component. It has been found that such a bush may be advantageous for use in a latch line or latch assembly of a folding wing, where space and weight requirements are particularly stringent. One or more of such a bush may be used in a latch line or latch assembly. For example, a bush may be inserted at one or both ends of a latch line or latch assembly.

The bush may be a plain bearing. The bush may be configured to prevent or reduce wear caused by a pin moving within an aperture, for example a pin rotating or sliding within an aperture. The bush may comprise metal, for example metal alloy, optionally steel, optionally copper nickel bronze alloy. Alternatively or additionally, the bush may comprise a composite material, for example wound glass fibre. The bush may have dimensions suitable for receiving a latch pin for locking a folding wing tip. The bush may be configured to have an interference fit within an aperture. Alternatively or additionally, the bush may comprise a lock ring for securing the bush within an aperture.

The bush may be a generally cylindrical component having a central bore, the bush suitable for insertion within an aperture. Where the bush is generally cylindrical, a cylindrical coordinate system may be used herein to refer to the geometry of the bush. For example, a longitudinal axis may be defined as running along a centre of the central bore. A radial axis may extend perpendicularly from the notional central axis. Accordingly, the term 'longitudinal' may refer to a direction along the longitudinal axis, and the term 'radial' may refer to a direction along the radial axis. It will be appreciated that the general form of the bush may depart from a cylinder, for example a rectangular cuboid, while the terms longitudinal and radial still apply.

The sleeve may comprise a substantially hollow cylinder. Part or all of the sleeve may be configured for insertion into an aperture, for example an aperture in an aircraft component, optionally an aperture for receiving a latch pin. The sleeve may have a diameter of at least 10 mm, optionally at least 25 mm, optionally at least 40 mm.

The shoulder may extend radially outward from the sleeve. In this way, the shoulder may resemble a collar around a portion of the sleeve, for example at a longitudinal end of the sleeve.

The sensor mount may comprise a cavity within the bush. Alternatively or additionally, the sensor mount may comprise a projection on the bush. The sensor mount may have dimensions corresponding to a sensor to be mounted. For example, the sensor mount may comprise a cavity within the bush, the cavity having an internal diameter corresponding to an outer diameter of a sensor to be mounted.

It may be that the bush further comprises a barrier, the barrier configured to prevent a pin received within the sleeve from extending past the barrier.

The barrier may be configured to prevent a pin received within the sleeve from passing entirely through the bush. This may be advantageous for use with a latch pin for locking a folding wing. For example, the barrier may prevent overextension of a latch pin and/or prevent loss of a broken or damaged latch pin. The barrier may be a protrusion, or more than one protrusion. The one or more protrusions may extend from an edge of the bush towards a radial centre of the bush.

It may be that the sensor mount is adjacent to the barrier.

This arrangement may minimise a longitudinal distance between the sensor mount and the sleeve. For example, in such an arrangement the barrier may be between the sleeve and the sensor mount. A sensor mounted on and/or within the sensor mount may therefore be optimally close to the sleeve, which may provide enhanced detection of the presence of a pin within the sleeve.

It may be that the barrier comprises a constriction in the bush.

In this way, the barrier may have a smaller radial dimension than a radial dimension of a pin received within the sleeve. Thus, a pin received within the sleeve may contact the barrier, and may be prevented from extending any further through the sleeve.

It may be that the sensor mount comprises a cavity in the bush.

A sensor may be received within the cavity. Such an arrangement may provide for optimal sensing of a pin within the sleeve, since the sensor may be in close proximity to the sleeve. Alternatively or additionally, the cavity may reduce the space external to the bush occupied by a sensor mounted within the cavity. This may facilitate mounting of a sensor in a compact manner.

It may be that the bush further comprises a sensor aperture for permitting electromagnetic transmission between the sensor mount and the sleeve.

The sensor aperture may provide optimal electromagnetic communication between the sensor mount and the sleeve. For example, where the material of the bush attenuates electromagnetic waves, the aperture may enable substantially unattenuated waves to propagate between the sleeve and the sensor mount. Such electromagnetic transmission may comprise magnetic flux, and may optionally comprise optical wavelengths. The sensor mount may be electrically transmitting to the sleeve.

It may be that the sensor mount comprises a retainer for retaining a sensor mounted to the sensor mount.

The retainer may provide a secure and reliable means of retaining a sensor. The retainer may comprise one or more splines, split pins, clamps and/or fasteners. For example, the retainer may comprise holes in the sensor mount through which fasteners are inserted to contact and secure a sensor mounted to the sensor mount. For example, the holes in the sensor mount may be threaded, and threaded fasteners may be inserted into these holes to secure a sensor to the sensor mount.

It may be that the sleeve, the shoulder and the sensor mount are integrally formed with one another.

In this way, manufacture of the bush may be simplified. Integrally forming the sleeve, shoulder and sensor mount with one another may provide a single component which may be inserted within an aperture, functioning both as a conventional bush and a sensor mount.

It may be that the bush comprises a body releasably connectable to a cap, the body comprising the sleeve and the shoulder, the cap comprising the sensor mount.

In this way, manufacturing and installation of a component comprising the bush may be improved. For example, a line boring procedure may be used while the body of the bush is inserted within an aperture in a line, for example a latch line or latch assembly in an aircraft folding wing. After the line boring procedure is completed, the cap may then be connected to the body, thereby providing a sensor mount for the sensor.

It may be that the cap comprises the barrier.

Such a bush may be advantageous for use in a latch line or latch assembly, for example a latch line or latch assembly manufactured using a line boring procedure. The body of the bush may be inserted within an aperture in a latch line during the line boring procedure. After the line boring procedure is completed, the cap may then be connected to the body, thereby providing a barrier to prevent a pin received in the sleeve from extending past the barrier.

It may be that the cap is threadably attachable to the body.

This may enable a secure and reversible means of attachment between the cap and the body. Alternatively or additionally, the cap may have an interference fit with the body.

According to a second aspect of the invention there is also provided a latch line or latch assembly for an aircraft wing, the latch line or latch assembly comprising: a latch pin for preventing movement of a wing tip relative to a fixed wing; and a bush according to the first aspect, the bush being received within at least one aperture of the wing tip and/or the fixed wing; wherein the latch pin is receivable within the sleeve of the bush. The bush may comprise any features described with relation to the first aspect of the invention.

In this way, the bush may function to enhance movement and/or limit friction between the latch pin and the at least one aperture. Further, the bush, or more particularly the sensor mount, may be used to mount a sensor to the latch line or latch assembly such that the sensor may detect the presence of the latch pin within the sleeve. Such detection of the pin may enable detectable failure of the latch line or latch assembly, for example in instances when the latch pin does not move as intended and/or when the latch pin fractures.

The latch line or latch assembly may run along a hinge or fold axis, where the wing tip meets the fixed wing. The fixed wing and the wing tip may each comprise a series of lugs and/or projections that interlink along the latch line or latch assembly. The latch line or latch assembly may comprise a plurality of latch pins, for example two latch pins.

It may be that the latch line or latch assembly comprises a sensor mounted to the housing, the sensor arranged to detect the presence of the latch pin within the sleeve.

The sensor may comprise an electromagnetic sensor. For example, the sensor may comprise a magnetic sensor. In such a case, the sensor may be configured to detect a magnetic change within the sleeve, for example where a pin received within the sleeve alters the magnetic flux through the sleeve, for example where a pin comprises ferromagnetic material. Alternatively or additionally, the sensor may comprise an optical sensor, for example a sensor configured to detect an optical change within the sleeve, for example where a pin received within the sleeve alters light transmission through the sleeve. The sensor may be further configured to determine the alignment of the latch line or latch assembly. For example, the sensor may be configured to determine relative movement of the wing tip and the fixed wing along the latch line or latch assembly.

According to a third aspect of the invention there is also provided an aircraft wing comprising a fixed wing and a wing tip mounted at an end of the fixed wing, the wing tip rotatable relative to the fixed wing about a hinge axis, each of the fixed wing and the wing tip comprising one or more apertures adjacent to the hinge axis, wherein the aircraft wing further comprises: a latch pin for preventing rotation of the wing tip relative to the fixed wing, wherein the latch pin is moveable into the one or more apertures of the fixed wing and the wing tip; and a bush according to the first aspect, the bush received within at least one aperture of the fixed wing and/or the wing tip; wherein the latch pin is receivable within the sleeve.

According to a fourth aspect of the invention there is also provided a method of mounting a sensor to a latch line or latch assembly for an aircraft wing, the method comprising inserting the bush according to the first aspect into at least one aperture within the latch line, and mounting a sensor to the sensor mount.

The aircraft wing may form part of an aircraft. The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figure 1 shows a perspective view of a bush according to an embodiment of the invention;
Figure 2 shows a perspective cross-sectional view of a bush inserted within an aperture, according to an embodiment of the invention;
Figures 3a and 3b are cross-sectional views of a bush included within a latch line, according to an embodiment of the invention;
Figure 4 shows an aircraft wing; and
Figure 5 shows an illustrative flow diagram of a method according to an embodiment of the invention.

### DETAILED DESCRIPTION

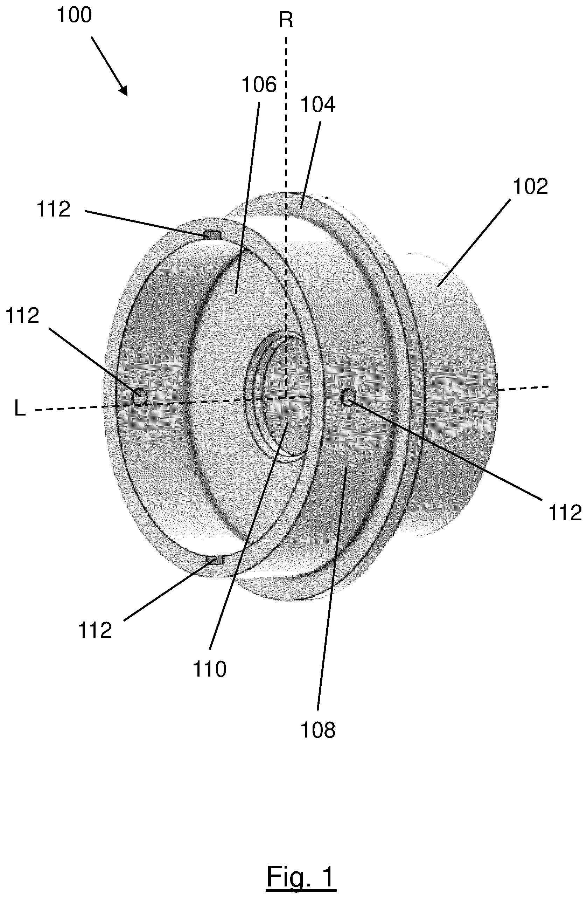

Figure 1 shows a perspective view of a bush 100. The bush 100 exhibits a degree of cylindrical symmetry about a longitudinal axis L, which is shown in broken lines and is aligned with a centre of the bush 100. A radial axis R extends perpendicularly from longitudinal axis L, and it will be appreciated that along any azimuthal angle of radial axis R may be referred to as a radial direction. On the right-hand side of the drawing, the bush 100 comprises a sleeve 102, which is a hollow generally cylindrical form. The sleeve 102 has outer dimensions corresponding to inner dimensions of an aperture into which the bush is inserted (not shown). The interior dimensions of the sleeve 102 correspond to a pin to be received within the sleeve 102 (not shown). Extending radially outward from the sleeve 102 is a shoulder 104, which has the largest radius of any part of the bush 100. The shoulder 104 is configured to delimit the insertion of the bush 100 into an aperture, such that the sleeve 102 can only be inserted so far until the shoulder 104 abuts an edge of an aperture.

Longitudinally adjacent to the shoulder 104 is a barrier 106, in the form of an annulus of smaller radius than the shoulder 104. The barrier 106 forms an annular wall at an end of the sleeve 102, and is configured to prevent a pin inserted within the sleeve 102 from extending past the barrier 106. Extending longitudinally away from the shoulder 104 and barrier 106 is a sensor mount 108, which is a hollow generally cylindrical form. A cavity within the sensor mount 108 has dimensions corresponding to a sensor (not shown) for mounting on the sensor mount 108. At the radial centre of the barrier 106 is a sensor aperture 110, which is a circular aperture connecting the radial centre of the sensor mount 108 with the radial centre of the sleeve 102. The sensor aperture 108 forms a conduit between the sleeve 102 and the sensor mount 108, thereby permitting electromagnetic communication therebetween. At four radial positions around the outer radial edge of the sensor mount 108, there are retainers 112 in the form of apertures and depressions in a wall of the sensor mount 108. It will be appreciated that the retainers 112 are suitable for receiving fasteners for retaining a sensor mounted to the sensor mount 108.

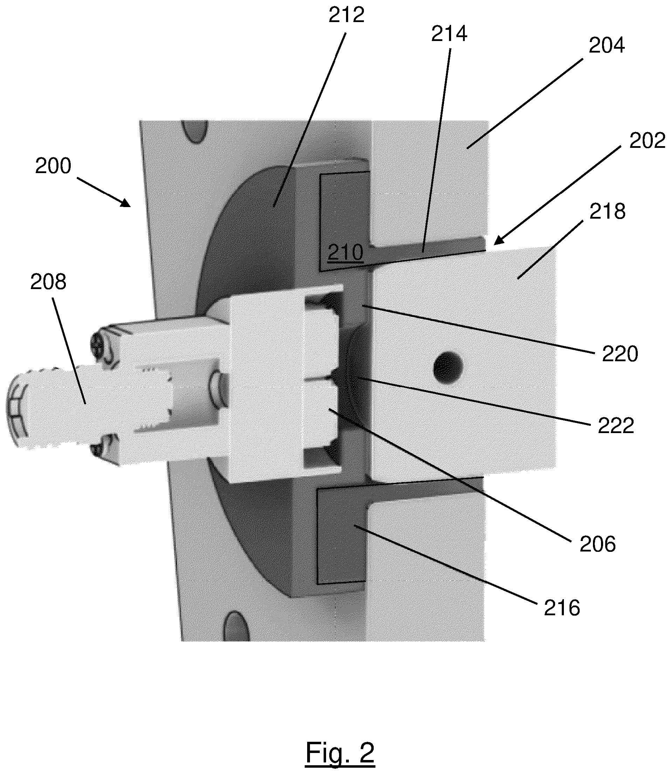

Figure 2 shows a perspective cross-sectional view of another embodiment of a bush 200. The bush 200 is shown inserted within an aperture 202 in a component 204, and a sensor 206 and associated sensor connector 208 are shown extending from the left-hand side of the bush 200. The bush 200 is formed from two separate parts - a bush body 210 on the right-hand side and a bush cap 212 on the left-hand side. The bush body 202 comprises a sleeve 214 inserted within the aperture 202, and a shoulder 216 abutting the left-hand side of the component 204. The abutment between the shoulder 216 and a portion of the component 204 surrounding the aperture 202 prevents further insertion of the sleeve 214. A portion of a pin 218 is shown inserted within the sleeve 214, with the remainder of the pin 218 extending to the right (not shown).

An outer edge of the bush cap 212 is positioned over an outer edge of the bush body 210, such that the outer edge of the bush cap 212 abuts the component 204. An inner portion of the bush cap 212 is positioned within the bush body 210, such that the inner portion of the bush cap 212 abuts the pin 218. Thus, this inner portion acts as a barrier 220, preventing further leftwards insertion of the pin 218 within the bush 200 and the aperture 202. The sensor 206 is inserted within a cavity in the bush cap 212. The radial centre of the bush cap comprises a sensor aperture 222, which facilitates electromagnetic communication between the sensor 206 and the centre of the sleeve 214, thereby facilitating detection of the pin 218 within the sleeve 214. It will be appreciated that the bush cap 212 may be an interference fit with the bush body 210, or the bush cap 212 may be threadably connectable to the bush body 210. Such a two-part configuration may be advantageous during manufacturing and installation of a line comprising the bush 200, since a line boring procedure may be used while the bush body 210 is fitted, and then the bush cap 212 may be connected after the procedure is completed.

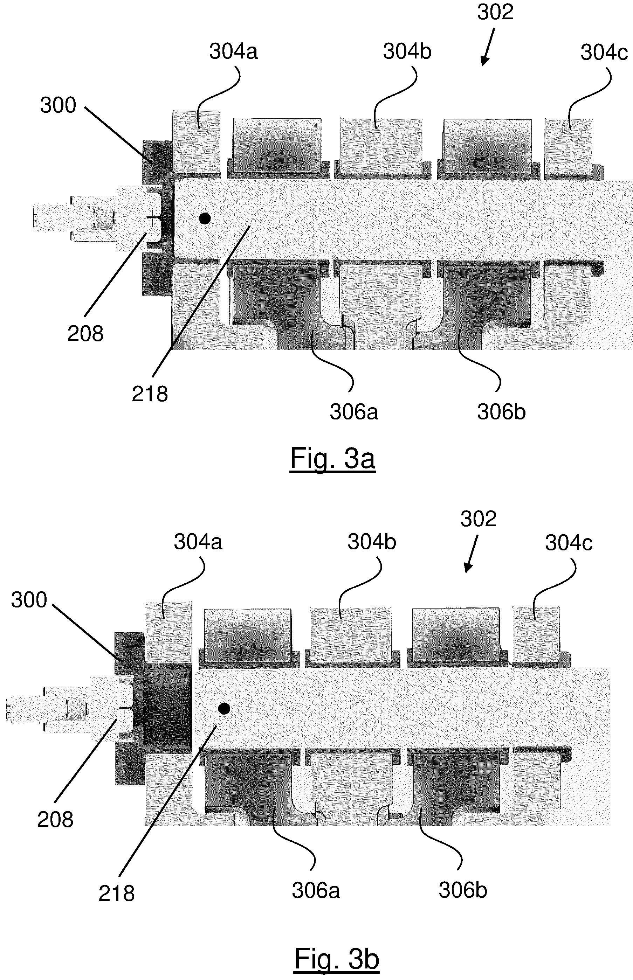

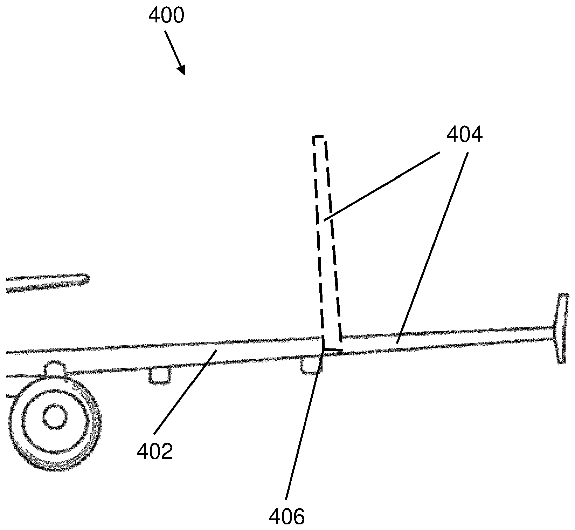

Figures 3a and 3b are cross-sectional views of a bush 300 included within a latch line/latch assembly 302 of an aircraft folding wing. The latch line 302 includes three first component lugs 304a, 304b, 304c, each comprising an aperture. The first component may be a fixed wing. The latch line also includes two second component lugs 306a, 306b, each comprising an aperture. The second component may be a folding wing tip, configured to fold relative to the fixed wing. A pin 218 is configured to pass through the apertures in each of the components 304a, 304b, 304c, 306a, 306b to lock the wing tip relative to the fixed wing and is moved into the locking position by a pin actuator.

In Figure 3a, the pin 218 has passed through all of the apertures, with the left-hand end of the pin 218 being received within the sleeve of the bush 300. The sensor 208 mounted on the left-hand side of the bush 300 is able to detect the presence of the pin 218 within the sleeve of the bush 300. In Figure 3b, the pin 218 has retracted or not been fully inserted, for example due to failure of the latch line 302 or pin actuator, and the left-hand end of the pin 218 no longer occupies the sleeve of the bush 300. The sensor 208 is able to detect the absence of the pin 218 within the sleeve of the bush 300, and thus the failure of the latch line 302.

Figure 4 shows an aircraft wing 400. The aircraft wing 400 comprises a fixed wing 402 and a wing tip 402 mounted at an end of the fixed wing 402.The wing tip 402 is rotatable relative to the fixed wing 402 about a hinge axis 406. It will be appreciated that the latch line of Figures 3a and 3b may be incorporated at the hinge axis 406, in order to lock and unlock the position of the wing tip 402 relative to the fixed wing 402.

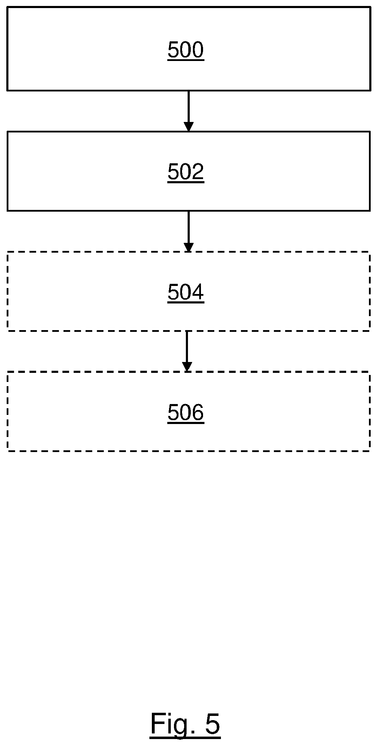

Figure 5 shows an illustrative flow diagram of a method according to an embodiment of the invention, wherein a sensor is mounted to a latch line for an aircraft wing. The method includes a step of inserting 500 a bush according to the first aspect of the invention into an aperture within the latch line, and a step of mounting 502 a sensor to the sensor mount. The method may further include a step of moving 504 a latch pin along the latch line, and a step of determining 506 the presence of the latch pin within the sleeve.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A latch assembly for an aircraft wing, the latch assembly comprising:
a latch pin for preventing movement of a wing tip relative to a fixed wing;
and a bush, the bush comprising
a sleeve for receiving a pin;
a shoulder extending from the sleeve, the shoulder for delimiting insertion of the sleeve into an aperture; and
a sensor mount for mounting a sensor such that the sensor may detect the presence of a pin within the sleeve,
the bush being received within at least one aperture of the wing tip and/or the fixed wing;
wherein the latch pin is receivable within the sleeve of the bush.

2. The latch assembly according to claim 1, further comprising a sensor mounted to the sensor mount, the sensor arranged to detect the presence of the latch pin within the sleeve.

3. The latch assembly according to claim 1 or claim 2, the bush further comprising a barrier, the barrier configured to prevent the pin received within the sleeve from extending past the barrier.

4. The latch assembly according to claim 3, wherein the sensor mount is adjacent to the barrier.

5. The latch assembly according to claim 3 or claim 4, wherein the barrier comprises a constriction in the bush.

6. The latch assembly according to any preceding claim, wherein the sensor mount comprises a cavity in the bush.

7. The latch assembly according to any preceding claim, further comprising a sensor aperture for permitting electromagnetic transmission between the sensor mount and the sleeve.

8. The latch assembly according to any preceding claim, wherein the sensor mount comprises a retainer for retaining a sensor mounted to the sensor mount.

9. The latch assembly according to any preceding claim, wherein the sleeve, the shoulder and the sensor mount are integrally formed with one another.

10. The latch assembly according to any of claims 1 to 8, wherein the bush comprises a body releasably connectable to a cap, the body comprising the sleeve and the shoulder, the cap comprising the sensor mount.

11. The latch assembly according to claim 10 when dependent on claim 3, wherein the cap comprises the barrier.

12. The latch assembly according to claim 10 or claim **11,** wherein the cap is threadably attachable to the body.

13. A bush comprising:
a sleeve for receiving a pin;
a shoulder extending from the sleeve, the shoulder for delimiting insertion of the sleeve into an aperture; and
a sensor mount for mounting a sensor such that the sensor may detect the presence of a pin within the sleeve.

14. An aircraft wing comprising a fixed wing and a wing tip mounted at an end of the fixed wing, the wing tip rotatable relative to the fixed wing about a hinge axis, each of the fixed wing and the wing tip comprising one or more apertures adjacent to the hinge axis, wherein the aircraft wing further comprises:
a latch pin for preventing rotation of the wing tip relative to the fixed wing, wherein the latch pin is moveable into the one or more apertures of the fixed wing and the wing tip; and
a bush according to claim 13, the bush received within at least one aperture of the fixed wing and/or the wing tip;
wherein the latch pin is receivable within the sleeve.

15. A method of mounting a sensor to a latch assembly for an aircraft wing, the method comprising inserting the bush according to any of claims 13 into at least one aperture within the latch assembly, and mounting a sensor to the sensor mount.
